# EUROPEAN PATENT SPECIFICATION

(11) **EP 2 856 403 B1**
(45) Date of publication and mention of the grant of the patent: **14.01.2026**
(21) Application number: 13745473.2
(22) Date of filing: 23.05.2013
(51) Int. Cl.: G06Q 20/20, H04M 1/02

(54) **PROCESS AND DEVICE FOR MANAGING THE EXECUTION OF AN ADMINISTRATIVE OPERATION**
VERFAHREN UND VORRICHTUNG ZUR VERWALTUNG DER AUSFÜHRUNG EINER ADMINISTRATIVEN OPERATION
PROCÉDÉ ET DISPOSITIF DE GESTION DE L'EXÉCUTION D'UNE OPÉRATION ADMINISTRATIVE

(30) Priority: 28.05.2012 IT RM20120245
(43) Date of publication of application: 08.04.2015
(73) Proprietor: Calò, Incoronata, 00030 San Cesareo RM (IT); Bisceglie, Pasquale, Maria, 00030 San Cesareo RM (IT)
(72) Inventor: BISCEGLIE, Pasquale Maria, 00030 San Cesareo RM (IT); CALÒ, Incoronata, 00030 San Cesareo RM (IT); BISCEGLIE, Antonio, 00030 Colonna RM (IT)
(86) International application number: PCT/IB2013/054270
(87) International publication number: WO 2013/179191

(56) References cited:
- US-A1- 2011 230 178
- US-A1- 2011 275 407
- US-A1- 2011 275 407

## Description

The present invention refers to a process and a device for managing the execution of an administrative operation to which the issuing of an administrative document is associated.

In particular, the present invention can be used by all commercial and/or professional operators, subject to specific tax and administrative treatments, like, e.g., IVA (Italian VAT) or VAT number holders.

The execution of administrative operations has significant drawbacks, both on the practical level and on the tax control level, therefore linked to the more general problem of tax evasion.

The crux of the problem lies in the fact that each administrative operation, in order to be faithfully performed, should somehow be authorized and, preferably, traced.

Consider, e.g., payments with a credit or debit card. Each payment is subject to a preventive authorization provided in real time by the service manager (credit institution, etc.).

On principle, the same should hold true for any other type of administrative operation.

Therefore, hereinafter in this description reference will still be made to a generic administrative operation and/or commercial transaction, thereby intending however to denote any operation, like e.g. the issuing of:
1) a definitive or down payment or pro forma invoice, a debit or credit note;
2) a transport document;
or the computer system-processed authentication of:
**a)** an import or export document in real time, performed directly by the user and self-loaded in its/his/her own data archive;
*b)* a credit/debit document with payment having a forward maturity, "bill" between private subjects, both physical and juridical ones, both at first drawing and in subsequent endorsements thereof;
***c*)** a tender in a public call for tenders for the contracting of works and/or supplies let out on contract by public bodies or the like, in absolute privacy, certainty and time certainty of the tender ;
***d)*** a bid in private and/or public auctions of Court-ordered type, announced by Courts and/or authorized subjects, even external ones, in absolute privacy, certainty and time certainty of the bid;
***e*)** a specific transport document, issued both by private subjects "physical persons with taxpayer's code number" and by private bodies or subjects or companies holders of a VAT number, contractors or local and/or public bodies, related to the waste management system in general, for both ordinary and extraordinary or special waste, valuable metals (copper, etc.) being comprised herein.

Although in some cases, like for payments by credit card, authorization is preliminary and required to proceed with payment, this is not so for a vast number of other types of administrative operations and/or commercial transactions.

Therefore, the execution of administrative operations and/or commercial transactions without any preventive authorization and without any traceability system for the same operations, leaves wide spaces to whom might wish to illegally carry out actions, defraud the revenue and therefore damage the entire community.

Moreover, also systems envisaging an authorization in real time suffer from some drawbacks. In particular, these can be operative only if, at the time when the transaction has to be performed, the telematics connection needed to request and receive the authorization is available.

However, numerous mishaps can happen, going from absence of connection to excessive traffic on computer or telematics network, or to simpler problems of flat batteries of the required devices, to sometimes make the operation itself impossible and therefore making the system useless.

Hence, object of the present invention is to solve the problems left still open by the known art, and this is obtained through a device as defined in claim 1.

A further object of the present invention is a process as defined in claim 10.

The present invention, by overcoming the problems of the known art, entails several evident advantages.

In particular, the present invention is provided for a use within the scope of a system for managing and controlling tax regulations and the regularity of administrative operations and/or commercial transactions of any type. Such a system, which may be managed by public and/or private authorities, envisages that administrative operations be performed in observance of some predetermined rules and with the aid of an expressly contrived device.

This ensures the system users (be them private subjects, physical subjects or companies holders of a VAT number) that the commercial and/or administrative documents issued and/or received be perfectly and unequivocally identified and traceable even with reference to their specific authorization paths, i.e. with reference to the specific types of administrative operations to which they refer.

Moreover, to receivers of the commercial and/or administrative documents there can be ensured a controlling of existence and truthfulness of the received documents, whose outcome can be notified to the receiver.

The near-total certainty of the mechanism would actually prevent any possibility of evasion, all administrative operations being recorded by the central management and control system and therefore subject to any possible inspection, even a cross-checking, by both the manager and the interested subjects.

All this moreover acts as motivation for the subjects, inducing them to have a honest and correct behavior. Said motivation can moreover be further strengthened by associating to the system for managing the administrative operations a system of incentives, in the form of tax concessions, reductions, etc. so that each subject be further induced to comply with imposed mechanisms by the possibility of obtaining also an economical benefit therefrom.

Moreover, in order to put system users under the best possible conditions and so as not to impose complex and structured implementation mechanisms, it is proposed a device for the execution of commercial operations which enables to accurately channel the sending of one's commercial and administrative information to the management system.

This is attained by some hardware and software functionalities of the device and by the design of an extremely structured, complete and complex database of authorization paths, inside which the user is guided in the choices by simple and intuitive interfaces. US2011275407 refers to a mobile phone that has a battery and a control module that are arranged inside a casing.

Other advantages, together with the features and the operation steps of the present invention, will be made apparent in the following detailed description of preferred embodiments thereof, given by way of example and not for limitative purposes. Reference will be made to the figures of the annexed drawings, wherein:

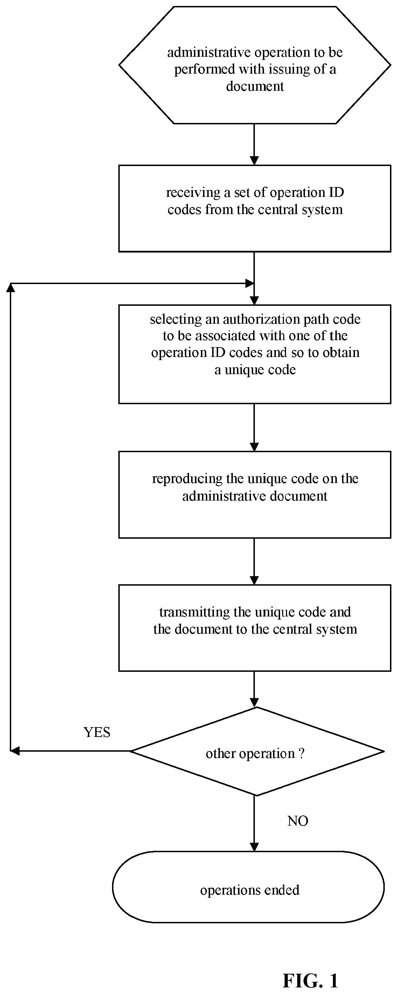

- Figure 1 is a flowchart schematizing a process according to the present invention; and
- Figure 2 is a block diagram of a device according to the present invention.

The present invention will hereinafter be described in detail making reference to the above-indicated figures.

According to the present invention, a process for the execution of administrative operations comprises first of all a step of receiving data, from a central management system.

Of the central management system and its functions, more will be mentioned hereinafter in the description.

The users of the process according to the present invention are, first of all, all operators (private ones and/or commercial operators), as well as local authorities, customs, public (even European) funding bodies and contracting public bodies, who have to issue documents of administrative type. As already explained, such documents may be invoices and/or others, this without entailing substantial modifications in the inventive concept of the present invention. Such operators, to be able to use the present invention, should somehow subscribe to the system, e.g. through known-type registration mechanisms, matched by mechanisms for recognition and identification of the same user.

Each user, at the time of its/his/her subscribing, will be equipped with at least a first set of operation identification (ID) codes for one or more types of administrative operations. In practice, each of the pre-assigned identification codes of operations will serve to uniquely associate one of the operations performed to the user him/her/itself.

Then, for each administrative operation to be performed, it will be necessary to process the data received as initial equipment.

This processing provides that a unique authorization code of the administrative document be assigned to the administrative operation to be performed, comprising:
an operation ID code; and
an authorization path code that, as will be described in more detail, is obtained by the user by means of suitable selection steps.

The unique code should then be combined by associating one of the operation ID codes with an authorization path code, so to obtain a unique code associated with the administrative operation performed.

Finally, the unique code so obtained is reproduced, e.g. by printing, inside said administrative document, or outside of document printing in case the interested subjects be public customs offices, local authorities, public funding bodies, or private subjects with reference to transport documents issued for itinerant transports with change of transporter, and therefore with the printing of a summary receipt with unique code depending on the main unique code of first authorization.

Then, the unique code and the administrative document corresponding to the performed operation have to be transmitted to said central system, where they will be stored and kept for any type of inspection and checking, both by authorities and by the operators themselves, as will be explained in greater detail.

As the user utilizes the operation ID codes pre-assigned to him/her/it, the central management system can resupply the user with new codes, e.g., upon reaching a predefined lower threshold.

### Codes

In particular, according to an embodiment of the present invention, the unique code is assigned in course of authorization of the administrative document, and is formed by a number of 5-pointed stars (to indicate UE countries) placed subsequently to one another to form an oval shape wherein an image of the country (individual state) or Europe (EU) or the World is set. Immediately right of the image a code (e.g., a bar code) can advantageously be provided, for instance summing up numeric and/or alphanumeric contents, in the top center a caption indicative of the type of administrative operation can be provided.

From a graphic standpoint, such caption might comprise the word 'pin', followed by:
authorization path type (e.g. Iva, Transport, Vat, Rents, Car, Contracts, Tenders, etc.), then followed by a separating mark and the country code, or by the term INTRA-EU, or Extra-EU.

At the bottom of the writing, the operation code could then be reported.

The operation code is preferably an alphanumeric code. Preferably, said code will be comprised of at least 20 characters which, starting from the left, might be so identified:
- the first two, of alphabetical type, representatives of the first two letters of a country code,
- the 3rd representative of the current year;
- the 4th and the 5th representative of the current month;
- the 6th representative of the division. Division 1) signifies the national system to which both subjects involved in the administrative and/or commercial transaction belong, if the same; Division 2) signifies the Intra-EU system to which the subjects involved in the administrative and/or commercial transaction belong, however both belonging to countries, though different from each other, equally part of the EU; Division 3) signifies the Extra-EU system to which the subjects involved in the administrative and/or commercial transaction belong, where one of the subjects involved in the administrative and/or commercial transaction belongs to a country part of the EU, and the other one Extra European Economic Union;
- the 7th representative of the sector; the sectors directly singled out and managed in self-determination by the user can be 9 or more; we will consider document management macrosectors, of which we will mention some examples: local buildings and units; Real estate (fixed assets) & lands; floating assets and shareholding; user's activities (invoicing system); ordinary commercial transports (user billing system); waste transport (user waste monitoring system); company self-financing management system by the user and by third subjects; relations with Civil Service or alike bodies, with regard to public auctions and invitations to tender; specialized waste disposal companies;
   the 8th and 9th representative of the section; we mention some examples related to the sector *"macrosector"* on a text I am reporting, *"direct activity of the user-invoicing system",* subdivided into various sections, some names of which will now be mentioned: direct invoicing of the goods and/or services belonging to one's commodity-related and/or professional activity; cars and/or road and/or rail transport means and/or aircrafts and/or yard moving equipment, all and/or directly in use to the user, private or company or third subject; medical professional services, and other professions; system of receipts for tax purposes; several other Sections; the 10th representative of the department, which generally speaking is a subdivision of Sections, and, by accurately singling out the above-described example we can create the department "issued invoices" from the other one, "received invoices"
- the 11th, representative of the room, again represents a subdivision of Department, where may be required depending on the departments, sections and sector to which it belongs;
- from 12th to 20th will be allocated (according to standard, e.g., random algorithms) in order to make the code uniquely determined.

Preferably, about 200 (or more) different types of administrative operations may be provided, to each of which a specific authorization path corresponds.

The process for obtaining the unique code is an integral part of the process according to the present invention.

Accordingly, it is advantageously provided that the operation of assigning a unique code may comprise also a step of selecting among the distinct authorization paths, to obtain an authorization path code.

The selecting step is contrived so as to be as intuitive as possible for the user, and will be carried out in a predefined information database.

In order to make the selecting as simple and intuitive as possible, it is preferably carried out through a succession of choices in sequence, preferably choices of terminology and/or symbolic type.

Such selecting operation, and the succession of choices performed by the user entails an automatic association of an authorization path code to an operation identification (ID) code, to finally obtain a unique code associated with the specific administrative operation in execution.

Preferably, the codes (both operation ID and authorization path codes, as well as unique ones) differ among them both in graphics and in the contents related to each operation.

According to an embodiment of the present invention, there may be advantageously provided a step of sending a notification message of data related to the performed administrative operation to interested parties. For instance, notification sending may be performed by sending email messages.

In order to prevent that notification emails may be modified and/or counterfeited, it is preferable that they be comprised of messages only for reading and/or printing.

This notification procedure is particularly useful, as of each transmission and each receiving data between the users and/or the remote management system, track is kept in the central management system, and all data transmitted and/or received (documents, messages, etc.) are correspondingly stored in the central management system.

This allows at any time the relevant authority and the users to be able to trace any administrative operation performed, inspect its contents and then highlight any anomalies.

For this purpose, a dedicated web portal can also be provided, through which, upon registration and authentication, each user can control the state of the administrative operations concerning it/him/her, perform controlling of existence and truthfulness of administrative documents, etc., as well as detect between users (sender and receiver), in execution of one's own self-protection and to the ends of the correctness of data exchanged and related to the administrative operation involved, any data discrepancy and/or inconsistency.

In order to induce operators to use the present invention, there may advantageously be provided that messages be printed on the administrative documents issued in the scope of the process according to the present invention, .

For instance, said messages may be of advertising type and/or be associated to a prizes and/or winnings system.

All the above, in particular the receiving data from the central management system and the transmitting data involved in the process for the execution of an administrative operation, can advantageously be performed by means of an expressly provided electronic device, equipped with innovative technical features making it particularly functional to the specific case.

In particular, any user wishing to exploit the present invention could be equipped with such a device, allowing to carry out any required step envisaged by the hereto-described process.

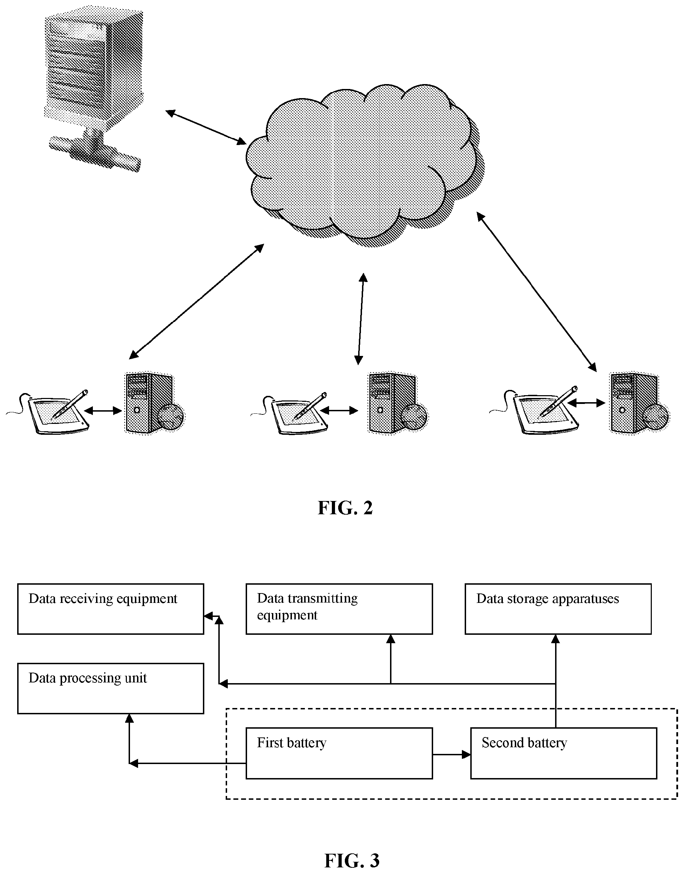

More in detail, Figure 2 shows a block diagram of a device according to the present invention.

A digital device 1 according to the present invention is utilized for managing the execution of a administrative operation to which the issuing of an administrative document is associated. First of all, said device comprises data receiving equipment.

In particular, such data are transmitted from a remote central management system and comprising at least a set of operation ID codes for one or more types of administrative operations.

For instance, a predefined number of operation ID codes is pre-assigned to each user, each of which codes will therefore serve, in association with an authorization path code, to authorize one of the performed operations to the same user in connection with the issuing of administrative documents.

The device 1 further comprises a data processing unit 3.

Said unit 3, suitably programmed, comprises data processing means apt to assign a unique code to each performed administrative operation.

Moreover, such means is apt to associate the authorization path code with one of the operation ID codes, so to yield a unique code associated with the administrative operation performed.

Moreover, the device also comprises corresponding data transmitting equipment 5, for transmitting the unique code and the administrative document connected with the performed administrative operation, to said remote central system.

The device further comprises data storage apparatuses 8 and an electric power supply unit 10.

The latter, advantageously, comprises a first battery 11.

The first battery 11 is the typical battery for the powering of any one electronic device. It supplies the electric energy required for operation of all of its internal apparatuses and devices, from the display to the input interfaces, etc.

Furthermore, however, a second battery 12 is provided. The second battery 12 is instead dedicated to the powering of only some apparatuses of the device, in particular it is dedicated to the powering of the transmitting equipment and of the data storage apparatuses and of the data receiving equipment for receiving data from the central system.

This, as it will be apparent also hereinafter in the description, allows to such transmitting equipment, storage apparatuses and receiving equipment to be able to operate and function even if said first battery 11 is flat and/or deactivated and/or when the device is turned off and therefore is not powered by the first battery 11.

In particular, this allows the storage and the delayed transmission of data, and therefore in fact the completion of the authorization process of the performed administrative operation, even in those situations in which this would prove substantially impossible, either for lack of electric energy for powering the device, or for the impossibility to telematically connect with the remote management system.

Advantageously, the first and the second battery can be both implemented as rechargeable batteries. For both, recharging can occur according to known standard modes, e.g. by connection to an electricity network.

However, according to the present invention, the second battery is rechargeable also through the first battery. This contributes to substantially ensure that the second battery never stays completely flat.

For instance, the data transmitting and receiving equipment may comprise a bidirectional telematics connection unit, in particular a modem, preferably wireless and based on a standard among: UMTS, GSM, FF, WiFi.

Therefore, apparently in case the commercial operation is performed in a position in which there is no network coverage for a wireless connection (be it by phone or telematics), the device will hold in memory the pending operation, to complete it - with the transmission of the data and codes to the remote central system - when the device gets to be in a coverage area.

The fact that the transmitting equipment and the storage apparatuses be powered by a battery 12 independent of the remainder of the device, causes the operation completion to be performed, irrespective of the state of the device itself (on/off, charged/flat) and therefore irrespectively of the user's will.

This ensures the correct registration of data in the central system, always and in any case substantially avoiding any possible attempt at bypassing the system provisions and/or fraud attempt by unfaithful operators.

The data storage apparatuses of the device are preferably subdivided into plural memory elements distinct thereamong.

It has to be understood that such a distinction may be of physical type and/or of logical type, this without altering the behavior of the device and the underlying operation logic.

In particular, the data storage apparatuses comprise a first memory element for storing identification (ID) codes transmitted by the remote management system.

Moreover, the data storage apparatuses comprise a second memory element for storing the administrative documents to be sent to the central management system.

Moreover, the data storage apparatuses comprise a third memory element for storing software updates, sent by the central management system, for the correct operation and/or updating of the device itself and of the procedures implemented by the software governing it.

Finally, the data storage apparatuses comprise a fourth memory element for storing advertising messages, sent by said central management system, in particular textual and/or figurative, to be printed on the administrative document corresponding to the performed administrative operation.

Apparently, thanks to the aforedescribed particular electrical powering mode, i.e. based on two batteries independent of each other, of which one dedicated to the powering of the data transmitting equipment, storage apparatuses and data receiving equipment, the software managing the device could be designed so that the various operations of storage and/or execution of software updates and/or data transmission, be performed, irrespective of the state of the device itself, at the time when this is deemed most advisable on the basis of the effect that is to be obtained.

Moreover, it has to be understood that a device according to the present invention could be implemented as a stand-alone device, of tablet-, palm-type or the like, completely and uniquely dedicated to the object of the present invention, but it could also be integrated in different and multi-function electronic apparatuses, such as, e.g., (desktop or portable) PCs, (advanced-type) mobile phones, etc.

The present invention has hereto been described with reference to preferred embodiments thereof. It is to be understood that each of the technical solutions implemented in the preferred embodiments, described herein by way of example, could advantageously be differently combined thereamong, to form other embodiments, all falling within the concept of the same invention, and all comprised within the protective scope of the claims hereinafter.

## Claims

1. Digital device for managing the execution of an administrative operation to which the issuing of an administrative document is associated, comprising:
- data receiving equipment, in particular for receiving data transmitted from a central management system, said data comprising at least a set of operation identification (ID) codes for one or more types of administrative operations;
- a processing unit for processing said received data, said unit comprising processing means apt to assign an authorization path code for each administrative operation to be performed, and to associate said authorization path code with one of said operation ID codes, so to obtain a unique code associated with this performed administrative operation;
- data transmitting equipment for transmitting said unique code and said administrative document to said central system;
- data storage apparatuses; and
- an electric power supply unit,
**characterized in that** said power supply unit comprises a first battery for powering the device and a second battery dedicated to the powering of said transmitting and receiving equipment and said data storage apparatuses, said transmitting equipment allowing a delayed transmission of the stored data, even if said first battery is flat and/or deactivated and/or when the device is turned off and/or is not powered by the first battery. wherein said second battery is rechargeable, also through said first battery, wherein said data storage apparatuses comprise a first memory element for storing operation identification (ID) codes, wherein said data storage apparatuses comprise a second memory element for storing administrative documents to be sent, even in delayed mode, to said central system.

2. Digital device according to anyone of the preceding claims, wherein said data storage apparatuses comprise a third memory element for storing software updates for the operation of the device itself.

3. Digital device according to anyone of the preceding claims, wherein said data storage apparatuses comprise a fourth memory element for storing advertising messages sent by said central system, in particular textual and/or figurative.

4. Digital device according to the preceding claim, further comprising means for reproducing said advertising messages at an issuing and/or printing of an administrative document.

5. Digital device according to anyone of the preceding claims, wherein said data transmitting and receiving equipment comprises a bidirectional telematics connection unit.

6. Device according to the preceding claim, wherein the bidirectional telematics connection unit comprises a modem, preferably wireless and based on a standard among: UMTS, GSM, FF, WiFi.

7. Process for the execution of administrative operations in a device according to claims 1-6, to which the issuing of an administrative document is associated, comprising the steps of:
- receiving data, said data comprising at least a set of operation identification (ID) codes of one or more types of administrative operations, in particular transmitted from a central management system;
and, for each administrative operation to be performed:
- processing said received data, said processing providing the assignation of an authorization path code to said administrative operation to be performed, and the association of said authorization path code with one of said operation ID codes, so to obtain a unique code associated with said administrative operation;
- reproducing said unique code inside said administrative document and/or on a summary receipt;
- transmitting said unique code and said administrative document to said central system.

8. Process according to the preceding claim, wherein said step of assigning an authorization path code comprises a selection between a plurality of predefined authorization path codes, that in particular differ therebetween both in graphics and in the contents related to each operation.

9. Process according to anyone of the claims 7 or 8, wherein said step of obtaining a unique code comprises at least a user's selection in a predefined information database.

10. Process according to claim 9, wherein said selection is made through a succession of choices in sequence.

11. Process according to claim 10, wherein said choices comprise choices of terminology and/or symbolic type.

12. Process according to one of the claims 7-11, further comprising a step of printing advertising messages on an administrative document.

13. Process according to claim 12, wherein said advertising messages are associated to a prizes or winnings system.

14. Process according to anyone of the claims 7-13, further comprising a step of sending a notification message of data related to the performed administrative operation to interested parties.

15. Process according to the preceding claim, wherein said notification is performed by sending email messages.

16. Process according to claim 14 or 15, wherein said notification messages are only for reading and printing.

17. Process according to anyone of the claims 7 to 16, further comprising a step of controlling existence and truthfulness of an administrative document by an access to a dedicated web portal.

18. Process according to anyone of the claims 7 to 17, wherein said unique code is formed by a number of 5-pointed stars for EU countries placed subsequently to one another to form an oval shape wherein, at the center the image of the country or Europe EU or the World and immediately right a bar code acquired data in the top center the type of administrative operation preceded by the word 'pin' preceded by the EU country code or the term INTRA-EU or Extra-EU and at the bottom of the inner portion the authorization path code associated with the operation ID code, forming an overall alphanumeric code of 20 characters.

19. Process according to claim 18, wherein said overall alphanumeric code of 20 characters will be comprised of, starting from the left, the first 11 characters for the code of the authorization path, of which, the first two are alphabetical representatives of the first two letters of a country code, all other numerical and in order of reading from left to right: the 3rd is representative of the current year; the 4th and 5th of the current month; the 6th of the division; the 7th of the sector; the 8th and 9th of the section; the 10th of the department; the 11th of the room; from 12th to 20th will be formed by the operation ID code, (allocated by the central system), so for an overall total of 20 characters in order to make the code uniquely determined and thereby identify the administrative and/or commercial document to be issued.

## Patentansprüche

1. Digitale Vorrichtung zur Verwaltung der Ausführung eines Verwaltungsvorgangs, mit dem die Ausstellung eines Verwaltungsdokuments verbunden ist, bestehend aus:
- Datenempfangsgeräte, insbesondere für den Empfang von Daten, die von einem zentralen Verwaltungssystem übermittelt werden und einschließlich mindestens eines Satzes von Transaktionsidentifikationscodes (IDs) für eine oder mehrere von Verwaltungstransaktionen;
- eine Verarbeitungseinheit zur Verarbeitung der empfangenen Daten, die Verarbeitungsmittel umfasst, die in der Lage sind, jedem auszuführenden Verwaltungsvorgang einen Code für den Genehmigungsweg zuzuweisen und diesen Code für den Genehmigungsweg mit einem der Codes zur Identifizierung des Vorgangs zu verknüpfen, um einen eindeutigen Code zu erhalten, der dem ausgeführten Verwaltungsvorgang zugeordnet ist;
- Datenübertragungseinrichtungen zur Übermittlung des eindeutigen Codes und des Verwa!tungsdokuments an das Zentralsystem;
- Datenspeichergeräte; und
- eine elektrische Stromversorgungseinrichtung,
**gekennzeichnet durch** eine erste Batterie zur Stromversorgung der Vorrichtung und eine zweite Batterie zur Stromversorgung der Sende- und Empfangseinrichtung und der Datenspeichereinrichtung, die die verzögerte Übertragung gespeicherter Daten auch dann ermöglicht, wenn die erste Batterie entladen und/oder ausgeschaltet ist und/oder wenn die Vorrichtung ausgeschaltet ist und/oder nicht von der ersten Batterie gespeist wird.
**wobei** die zweite Batterie ebenfalls durch die erste Batterie wiederaufladbar ist **wobei** solche Datenspeichergeräte ein erstes Speicherelement zur Speicherung von Transaktionsidentifikationscodes (IDs) umfassen, in denen diese Datenspeicher ein zweites Speicherelement für die Speicherung von Verwaltungsdokumenten enthalten, die im auch aufgeschobenen Modus Zentralsystem zu senden sind.

2. Digitales Gerät nach einem der vorhergehenden Ansprüche, wobei Die vorgenannten das Datenspeichergerät ein drittes Speicherelement zum Speichem von Software-Updates für den Betrieb des Geräts umfasst.

3. Digitales Gerät nach einem der vorhergehenden Ansprüche, wobei die Datenspeichereinrichtungen ein viertes Speicherelement zur Speicherung der vom Zentralsystem gesendeten Werbenachrichten, insbesondere Text- und/oder Bildnachrichten, umfassen.

4. Das im vorstehenden Absatz genannte digitale Gerät ist mit Mitteln zur Wiedergabe von Werbebotschaften bei der Ausstellung und/oder dem Druck eines Verwaltungsdokuments ausgestattet.

5. Digitales Gerät nach einem der vorhergehenden Ansprüche, wobei die Vorrichtung zum Senden und Empfangen von Daten eine Zwei-Wege-Telematik-Verbindungseinheit umfasst.

6. Vorrichtung nach dem vorhergehenden Anspruch, wobei die Zwei-Wege-Telematik-Verbindungseinheit ein Modem umfasst, das vorzugsweise drahtlos ist und auf einem der folgenden Standards basiert: UMTS, GSM, FF, WiFi.

7. Verarbeitung zur Durchführung von Verwaltungsvorgängen in einer Vorrichtung nach einem der Ansprüche 1 bis 6, wobei das Ausstellen eines Verwaltungsdokuments damit verbunden ist, umfassend die Schritte::
- Empfang von Daten, die mindestens einen Satz von Transaktionsidentifizierungscodes (IDs) einer oder mehrerer Arten von Verwaltungstransaktionen umfassen, die insbesondere übermittelt werden durch ein zentrales Management-System; und für jeden auszuführenden Verwaltungsvorgang;
- die Verarbeitung dieser empfangenen Daten, die darin besteht, diesem auszuführenden Verwaltungsvorgang einen Code für den Genehmigungsweg zuzuweisen und diesen Code für den Genehmigungsweg mit einem der Codes für die Vorgangsidentifizierung zu verknüpfen, um einen eindeutigen Code für diesen Verwaltungsvorgang zu erhalten;
- die Wiedergabe dieses eindeutigen Codes in diesem Verwaltungsdokument und/oder auf einer zusammenfassenden Quittung;
- die Übermittlung des eindeutigen Codes und des Verwaltungsdokuments an das Zentralsystem.

8. Verfahren nach einem der vorhergehenden Ansprüche, wobei der Schritt des Zuordnens eines Autorisierungsrautencodes eine Auswahl aus einer Vielzahl von vordefinierten Autorisierungsroutencodes umfasst, die sich insbesondere sowohl grafisch als auch inhaltlich in Bezug auf jeden Vorgang voneinander unterscheiden

9. Verfahren nach einem der Ansprüche 7 oder 8, wobei der Schritt der Gewinnung eines eindeutigen Codes mindestens eine Auswahl des Benutzers in einer Datenbank mit vordefinierten Informationen umfasst.

10. Verfahren nach Anspruch 9, bei dem die Auswahl durch eine Abfolge von Wahlmöglichkeiten in der Reihenfolge

11. Verfahren nach Anspruch 10, bei dem die Auswahlmöglichkeiten terminologische und/oder symbolische Auswahlmönlichkeiten umfassen

12. Verfahren nach einem der Ansprüche 7 bis 11, das ferner einen Schritt des Druckens von Werbebotschaften auf ein Verwaltungsdokument umfasst.

13. Verfahren nach Anspnich 12, wobei die Werbung mit einem Preis- oder Gewinnsystem verbunden ist.

14. Verfahren nach einem der Ansprüche 7 bis 13, das ferner den Schritt des Sendens einer Nachricht umfasst, mit der interessierte Parteien über die ausgeführten administrative Tätigkeit informiert werden.

15. Verfahren nach dem vorhergehenden Anspruch, bei dem die Benachrichtigung per E-Mail erfolgt.

16. Verfahren nach Anspruch 14 oder 15, wobei die Benachrichtigungen nur zum Lesen und Drucken bestimmt sind.

17. Verfahren nach einem der Ansprüche 7 bis 16, das ferner einen Schritt zur Überprüfung des Vorhandenseins und des Wahrheitsgehalts eines Verwaltungsdokuments über den Zugang zu einem speziellen Webportal umfasst.

18. Verfahren nach einem der Ansprüche 7 bis. 17, wobei der eindeutige Code durch eine Anzahl von fünfzackigen Sternen für EU-Länder gebildet wird, die hintereinander angeordnet sind und eine ovale Form bilden, in der in der Mitte das Bild des EU-Landes oder Europas oder der Welt und unmittelbar rechts davon ein Strichcode mit den erfassten Daten, oben in der Mitte die Art des Verwaltungsvorgangs, dem das Wort "Pin" vorangestellt ist, davor der Code des EU-Landes oder die Bezeichnung INTRA-EU oder Extra-EU und unten im inneren Teil der Code des Genehmigungsweges, der mit dem Identifizierungscode des Vorgangs verbunden ist, so dass ein alphanumerischer Gesamtcode von 20 Zeichen entsteht.

19. Verfahren nach Anspruch 18, **dadurch gekennzeichnet, dass** der alphanumerische Gesamtende von 20 Zeichen, von links beginnend, aus den ersten 11 Zeichen für den Code der Zulassungsstrecke besteht, von denen die ersten beiden alphabetische Vertreter der ersten beiden Buchstaben eines Ländercodes sind, alle anderen numerisch und in Lesereihenfolge von links nach rechts, wobei das dritte Zeichen für das laufende Jahr steht;
die 4. und 5. des laufenden Monats; die 4. und 5. des laufenden Monats; die 6. aus der Abteilung; die 7. aus dem Sektor; die 8. und 9. aus der Sektion; die 10. aus der Dipartment; die 11. aus dem Raum; von der 12. bis zur 20. wird der (vom Zentralsystem zugewiesene) Transaktionsidentifizierungscode mit insgesamt 20 Zeichen angegeben, um den Code eindeutig zu bestimmen und so das auszustellende Verwaltings- und/oder Handelsdokument zu identifizieren.

## Revendications

1. Dispositif numérique pour gérer l'exécution d'une opération administrative à laquelle est associée la délivrance d'un document administratif, composé de :
- un équipement de réception de données, notamment pour recevoir des données transmises par un système de gestion central, qui comprend au moins un ensemble de codes d'identification de transaction (ID) pour un ou plusieurs types de transactions administratives;
- une unité de traitement des données reçues, qui comprend des moyens de traitement capables d'attribuer un code de parcours d'autorisation pour chaque opération administrative à effectuer et d'associer ce code de parcours d'autorisation à l'un des codes d'identification de l'opération, de manière à obtenir un code unique associé à l'opération administrative effectuée;
- un équipement de transmission de données pour transmettre le code unique et le document administratif au système central;
- les équipements de stockage de données ; et
- une unité d'alimentation électrique,
**caractérisé par** une première batterie destinée à alimenter le dispositif et une seconde batterie destinée à alimenter les équipements d'émission et de réception et l'équipement de stockage des données, ce qui permet la transmission différée des données stockées même lorsque la première batterie est déchargée et/ou éteinte et/ou lorsque le dispositif est éteint et/ou n'est pas alimenté par la première batterie.
Lorsque la deuxième batterie est rechargeable, elle l'est également par la première batterie, où ces dispositifs
de stockage de données comprennent un premier élément de mémoire pour stocker les codes d'identification des transactions,
dans lequel ces dispositifs de stockage de données comprernent un deuxième élément de stockage pour les documents administratifs à envoyer, également en mode différé, à ce système central.

2. Dispositif numérique selon l'une quelconque des revendications précédentes, dans lequel ledit appareil de stockage de données comprend un troisième élément de stockage destiné à stocker des mises à jour logicielles pour le fonctionnement dudit dispositif.

3. Dispositif numérique selon l'une quelconque des revendications précédentes, dans lequel les dispositifs de stockage de données comprennent un quatrième élément de mémoire destiné à stocker les messages publicitaires envoyés par le système central, en particulier les messages textuels et/ou figuratifs.

4. Le dispositif numérique visé à l'alinéa précédent est équipé des moyens de reproduire des messages publicitaires lors de l'émission et/ou de l'impression d'un document administratif.

5. Le dispositif numérique selon l'une des revendications précédentes, dans lequel le dispositif de transmission et de réception des données comprend une unité de connexion télématique bidirectionnelle.

6. Dispositif selon la revendication précédente, dans lequel l'unité de connexion télématique bidirectionnelle comprend un modem, de préférence sans fil et basé sur une norme parmi : UMTS, GSM, FF, WiFi.

7. Traitement pour effectuer des opérations administratives dans un dispositif selon l'une des revendications 1 à 6, dans lequel la délivrance d'un document administratif est associée, comprenant les étapes suivantes :
• réception de données, y compris au moins un ensemble de codes d'identification de transaction (ID) d'un ou de plusieurs types d'opérations administratives, en particulier transmis par un système de gestion central ; et, pour chaque opération administrative à exécuter
• le traitement de ces données reçues, qui consiste à attribuer un code de parcours d'autorisation à cette opération administrative à effectuer et à associer ce code de parcours d'autorisation à l'un des codes d'identification de l'opération, de manière à obtenir un code unique associé à cette opération administrative ;
• la reproduction de ce code univoque dans ce document administratif et/ou sur un récapitulatif des recettes
• la transmission de ce code univoque et de ce document administratif au système central.

8. Procédé selon l'une quelconque des revendications précédentes, dans lequel l'étape d'attribution d'un code de parcours d'autorisation comprend une sélection parmi une pluralité de codes de parcours d'autorisation prédéfinis, qui diffèrent en particulier les uns des autres tant par le graphisme que par le contenu relatif à chaque opération.

9. Procédé selon l'une des revendications 7 ou 8, dans lequel l'étape d'obtention d'un code univoque comprend au moins une sélection de l'utilisateur dans une base de données d'informations prédéfinies.

10. Procédé selon la revendication 9, dans lequel la sélection se fait par une succession de choix en séquence.

11. Procédé selon la revendication 10, dans lequel les choix comprennent des choix terminologiques et/ou symboliques.

12. Procédé selon l'une des revendications 7 à 11, comprenant en outre une étape d'impression de messages publicitaires sur un document administratif.

13. Procédé selon la revendication 12, dans lequel les annonces sont associées à un système de prix ou de gains.

14. Procédé selon l'une des revendications 7 à 13, comprenant en outre une étape d'envoi d'un message notifiant aux parties intéressées les données de l'opération administrative exécutée,

15. Procédé selon la revendication précédente, dans lequel la notification se fait par courrier électronique.

16. Procédé selon la revendication 14 ou 15, dans lequel les messages de notification sont uniquement destinés à la lecture et à l'impression,

17. Procédé selon l'une des revendications 7 à 16, comprenant en outre une étape de vérification de l'existence et de la véracité d'un document administratif via l'accès à un portail web dédié.

18. Procédure selon l'une des revendications 7 à 17, dans laquelle le code unique est formé par un certain nombre d'étoiles à 5 branches pour les pays de l'UE, disposées les unes à la suite des autres pour former une forme ovale dans laquelle au centre l'image du pays de l'UE ou de l'Europe ou du Monde et immédiatement à droite un code à barres avec les données acquises en haut au centre le type d'opération administrative précédé du mot « NIP » précédé du code du pays de l'UE ou du terme INTRA-UE ou Extra-UE et en bas dans la partie intérieure le code de parcours d'autorisation associé au code d'identification de l'opération, formant un code alphanumérique total de 20 caractères.

19. Procédé selon la revendication 18, dans lequel ledit code alphanumérique total de 20 caractères sera composé, en commençant par la gauche, des 11 premiers caractères du code de la voie d'autorisation, dont les deux premiers sont des représentants alphabétiques des deux premières lettres d'un code de pays, tous les autres étant numériques et dans l'ordre de lecture de gauche à droite : le troisième est représentatif de l'année en cours ;
le quatrième et le cinquième du mois en cours ; le sixième de la division ; le septième du secteur ; les huitième et neuvième de la section ; le dixième du département ; le onzième de la salle ; du douzième à vingtième seront formés par le code d'identification de la transaction (attribué par le système central), pour un total de au moins vingt caractères, afin de rendre le code unique et d'identifier ainsi le document administratif et/ou commercial à délivrer.
